Europäisches Patentamt

European Patent Office

Office européen des brevets

(11) Numéro de publication: **0 298 788**
**B1**

(12) **FASCICULE DE BREVET EUROPEEN**

(45) Date de publication du fascicule du brevet: **02.01.91**

(21) Numéro de dépôt: **88401372.3**

(22) Date de dépôt: **07.06.88**

(51) Int. Cl.⁵: **B 60 J 1/00**

(54) **Méthode de pose de vitrage automobile par collage direct et vitrage pour le collage.**

(30) Priorité: **09.07.87 DE 3722657**

(43) Date de publication de la demande:
**11.01.89 Bulletin 89/02**

(45) Mention de la délivrance du brevet:
**02.01.91 Bulletin 91/01**

(84) Etats contractants désignés:
**AT BE CH DE ES FR GB IT LI LU NL SE**

(56) Documents cités:
**EP-A-0 121 480**
**US-A-4 581 276**

(73) Titulaire: **SAINT-GOBAIN VITRAGE INTERNATIONAL**
**18, avenue d'Alsace**
**F-92400 Courbevoie (FR)**
㊶ **BE CH ES FR GB IT LI LU NL SE AT**

(73) Titulaire: **VEGLA VEREINIGTE GLASWERKE**
**Viktoriaallee 3-5**
**D-5100 Aachen (DE)**
㊶ **DE**

(72) Inventeur: **Kunert, Heinz**
**23 Am Krielerdom**
**D-5000 Köln 41 (DE)**

(74) Mandataire: **de Toytot, Robert et al**
**SAINT-GOBAIN RECHERCHE 39 quai Lucien Lefranc B.P. 135**
**F-93304 Aubervilliers Cédex (FR)**

Courier Press, Leamington Spa, England.

EP 0 298 788 B1

**Description**

L'invention concerne un procédé de pose d'un vitrage automobile par collage direct dans lequel on pose sur l'une des deux surfaces à coller, un cordon d'une masse adhésive pâteuse à l'aide d'une buse d'extrusion, ce cordon étant destiné à jouer immédiatement le rôle de colle ou bien, après durcissement, celui de cordon ou de couche intercalaires entre le vitrage et un autre cordon de colle, procédé dans lequel on place simultanément avec le cordon, soit au coeur du cordon, soit dans sa proximité immédiate, un fil souple à haute résistance à la traction, le fil étant destiné lors d'un éventuel démontage ultérieur du vitrage, hors de la baie, à permettre le cisaillement du cordon.

Dans une méthode de pose connue conforme au procédé, le cordon de colle destiné, soit à provoquer un collage immédiat, soit, après durcissement, à jouer le rôle de cordon ou de couche intercalaires, est déposé au bord du vitrage et l'on pose également un fil souple, soit au coeur du cordon, soit à sa proximité immédiate (demande de brevet européen EP—A—0 121 480). Dans ce procédé connu, dans le cas où le vitrage doit être démonté du véhicule le fil souple doit traverser toute la largeur du cordon de colle. Mais étant donné que les matériaux utilisés habituellement dans le but de constituer ces cordons de colle ont lorsqu'ils sont durcis une grande consistance il est nécessaire d'exercer des contraintes de cisaillement très importantes qui nécessitent elles-mêmes des forces de traction conséquentes de manière à pouvoir cisailler le matériau sur toute sa largeur. Plus les forces de traction augmentent, plus le danger de dépasser la charge de rupture du fil s'accroît, ce qui entraînerait sa rupture. Ce risque est particulièrement important lorsque le fil est placé le long du cordon du côté de la zone de vision du vitrage et que la traction sur le fil s'effectue depuis l'extérieur du véhicule. Dans ce cas, le fil est sollicité dans des conditions particulièrement délicates à l'endroit où il contourne le bord du verre. Alors le risque est grand de voir le fil subir des efforts supérieurs à sa résistance propre.

Une mesure évidente que l'on peut prendre pour accroître la résistance du fil consiste à augmenter son diamètre mais une telle mesure entraîne des inconvénients qui empêchent d'obtenir le résultat recherché. C'est ainsi que les caractéristiques de découpe du cordon par le fil se dégradent. D'une part, l'augmentation du diamètre du fil impose d'exercer des forces de traction supérieures. D'autre part, les forces nécessaires au cisaillement du cordon croissent plus vite que lu résistance à la traction du fil. On constate ainsi que l'utilisation de fil de plus grand diamètre ne résoud pas le problème posé.

Le but de l'invention est donc de faire évoluer le procédé mentionné ci-dessus de telle sorte que les forces de treaction qu'il est nécessaire d'exercer pour provoquer le démontage du vitrage puissent diminuer et qu'ainsi le démontage du vitrage soit facilité tandis que les risques de voir une rupture du fil diminuent.

Selon l'invention ce but sera atteint en introduisant dans le cordon et en déposant avec lui au moins deux fils souples positionnés dans la section du cordon de telle manière que lors du démontage du vitrage chacun des fils n'ait à cisailler qu'une partie de la section du cordon.

Le procédé selon l'invention tient compte du fait que la force de traction nécessaire pour rompre le cordon de colle dépend en grande partie de la section du cordon. Mais comme il n'est pratiquement pas possible de diminuer sensiblement la section proprement dite du cordon, l'invention propose de réduire l'épaisseur de cordon que le fil devra cisailler en utilisant non pas un seul mais deux ou plusieurs fils placés dans un même plan. Lorsque l'on cherche à cisailler le cordon on va tirer séparément ou ensemble les fils dans une direction à peu près perpendiculaire à leur direction d'origine. On obtient de la sorte que la surface de cisaillement produite par la traction sur l'un des fils soit continuée par la surface de cisaillement produite par le fil voisin. Le résultat est une surface de séparation sensiblement plane qui traverse tout le diamètre du cordon et est constituée de la juxtaposition de deux ou plusieurs surfaces de séparation correspondant chacune à l'action de l'un des fils.

Le procédé selon l'invention est compatible en principe avec les différentes méthodes de collage direct du vitrage. C'est ainsi que le cordon de collage et son fil peuvent être posés simultanément juste avant de placer le vitrage dans la baie de la carrosserie, ou bien dans la baie, directement sur la tôle de fixation, ou bien sur le bord du vitrage. Dans ces cas, les fils qui permettront le cisaillement du cordon se trouvent finalement insérées dans le cordon unique qui effectue le collage direct entre le vitrage et la baie.

D'une manière particulièrement avantageuse on peut mettre en oeuvre l'invention avec les procédés de collage dans lesquels on commence par équiper le vitrage d'une couche de colle que l'on laisse durcir sur le vitrage. Cette couche jouera ensuite le rôle d'intercalaire entre le vitrage et le cordon de colle qui servira à réaliser le collage proprement dit. Dans ce cas, il est avantageux de positionner les fils souples soit dans la couche de colle, soit avec la couche de colle qui se trouve dans la zone de bord du vitrage. Lorsqu'on dépose de telles couches de colle sur le vitrage elles ont souvent une section en U c'est-à-dire que les limites de la couche constituent des sortes de remblais entre lesquels se trouve une zone en creux. Ce canal recevra ensuite au moment de la pose du vitrage le deuxième cordon de colle. Comme la couche de colle qui a été placée sur le vitrage dans un premier temps—à la différence de celle qui sera déposée au moment de la pose du vitrage dans la bite, qui, elle, a une largeur qui dépend directement de la pression exercée au moment de la pose -garde ses dimensions d'origine, elle est particulièrement appropriée pour qu'on y place les fils souples car ainsi leur position peut être déterminée une fois pour toutes.

Bien entendu, comme dans le cas du procédé bien connu où l'on utilise un seul fil pour obtenir le cisaillement du cordon de colle, il est également nécessaire dans le cas de l'invention de conduire l'extrémité des fils latéralement vers l'extérieur du cordon de colle où on pourra les saisir facilement lorsqu'il s'agira de démonter le vitrage. Pour exercer la traction sur les fils lors du démontage on pourra utiliser les moyens habituels comme par exemple un système mécanique d'enroulement qui pourra prendre appui sur le vitrage lui-même ou sur la carrosserie. Un tel système permet de donner aux fils la direction voulue pour effectuer le cisaillement, perpendiculairement au cordon de colle et également de doser la force de traction.

Des exemples de réalisation de l'invention vont maintenant être expliqués à l'aide des figures. Celles-ci montrent successivement:

figure 1: la liaison par collage d'un pare-brise, liaison constituée d'un cordon déposé sur le bord de la baie équipé de deux fils souples pour le cisaillement ultérieur qui sont dirigés vers l'intérieur.

figure 2: la liaison par collage d'un pare-brise, liaison constituée par un cordon de colle déposé au bord du vitrage et équipé de deux fils dirigés vers l'extérieur.

figure 3: la liaison par collage d'un parebrise constituée d'un cordon déposé dans un premier temps au bord du vitrage, un deuxième cordon de colle servant de liaison entre le premier cordon durci et le bord de la baie. Le premier cordon est équipé de deux fils souples dont les extrémités sont dirigées vers l'intérieur.

figure 4: liaison par collage constituée de deux cordons assurant chacun une part du collage équipés de deux fils dont l'un à son extrémité à l'intérieur et l'autre à l'extérieur.

figure 5: liaison par collage avec deux cordons partiels de colle avec, dans le premier, trois fils destinés à provoquer le cisaillement.

figure 6: dispositif pour fabriquer un vitrage équipé selon la figure 3 d'un cordon destiné à durcir.

figures 7 à 9: trois exemples de réalisation différents de fils doubles destinés à être posés simultanément.

Sur les dessins, le pare-brise 1 est chaque fois présenté comme un vitrage feuilleté constitué de deux feuilles de verre silicosodocalcique 3, 4 associées l'une à l'autre par une couche intercalaire thermoplastique 2. Il est évident qu'on peut remplacer cette combinaison soit par un pare-'brise monolithique soit par un vitrage feuilleté constitué différemment. De même, les fils souples sont représentés constitués d'un seul brin mais ils peuvent aussi bien être faits de plusieurs filaments.

Sur la périphérie du parebrise 1 du côté du vitrage opposé à la tôle de fixation 5 de la baie 6 de la carrosserie d'automobile on a déposé une couche 7 en forme de cadre constituée d'un pigment opaque dans une base céramique ou polymère. Ce dépôt 7 possède une double fonction d'abord celle d'un cadre décoratif qui empêche que la zone de collage ne soit visible au travers du parebrise 1 et d'autre part celle de favoriser l'adhérence entre le cordon de colle 8 et la surface du verre proprement dite et même éventuellement de protéger le cordon 8 contre l'action des rayons ultraviolets. La liaison entre le parebrise 1 et la tôle de fixation 5 est assurée par le cordon 8. La composition de la colle du cordon 8 est adaptée, il est par exemple en caoutchouc butyl ou bien en polyuréthane. Dans ce dernier cas il peut s'agir d'un système unicomposant durcissant à l'humidité, ou bien d'un système bicomposant.

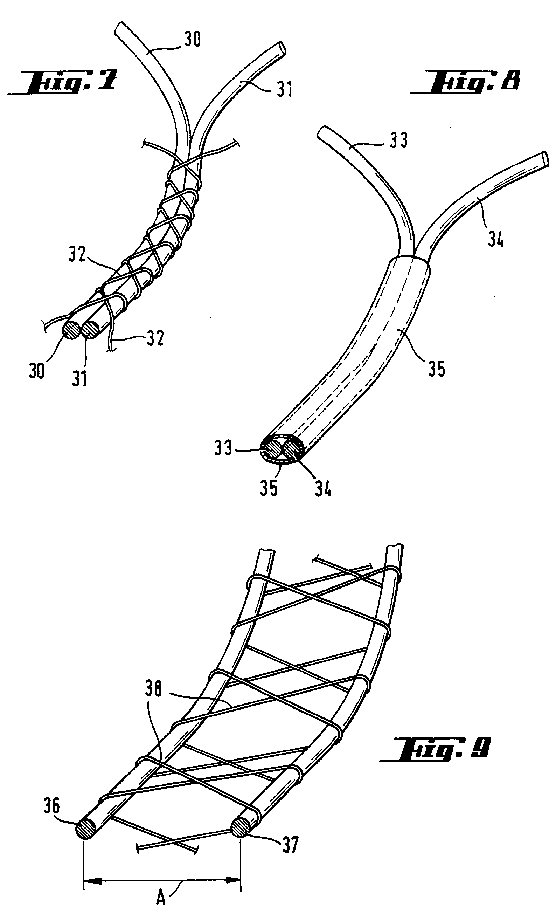

Le cordon de colle 8 est déposé sur la tôle de fixation 5 immédiatement avant le montage du parebrise 1 dans le cadre 5, 6 de la carrosserie de l'automobile. Pour déposer le cordon, on utilise un dispositif qui sera décrit plus lion à l'aide de la figure 6. En même temps que le cordon 8 on a placé deux fils souples 9 et 10 sur la tôle 5. Le fil 9 est positionné à la limite extérieure du cordon 8 tandis que le fil 10 est lui, situé approximativement au milieu de la surface de contact entre le cordon 8 et la tôle 5. Les extrémités 9', 10' des deux fils 9 et 10 traversent le cordon 8 et rejoignent le bord de la baie de telle sorte qu'en cas de besoin, lorsque le pare-brise devra être démonté, on puisse les saisir. Les deux extrémités des fils 9' et 10' sont chacunes marquées différemment de telle sorte que lors du démontage du parebrise 1 ce soit le fil médian 10 sur lequel on tire d'abord avant d'agir sur le fil externe 9.

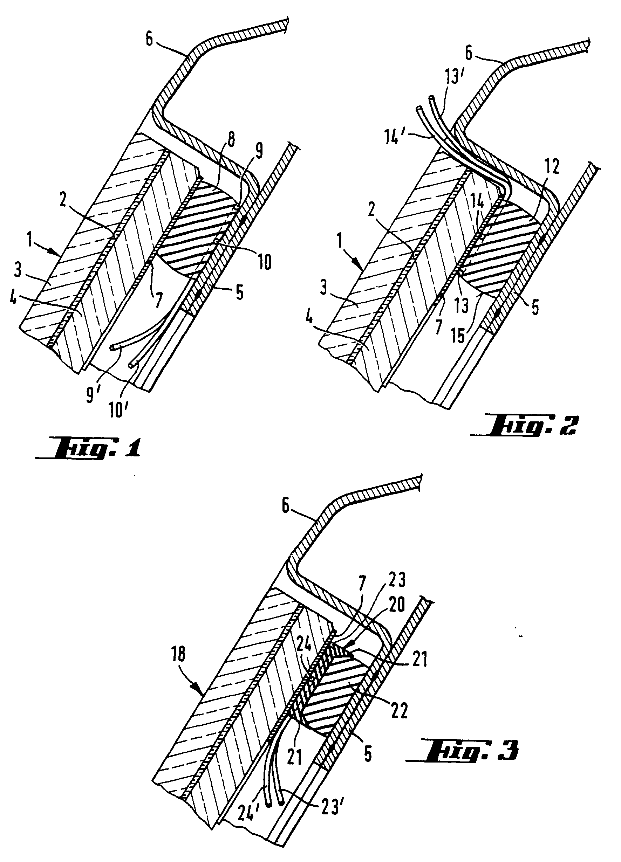

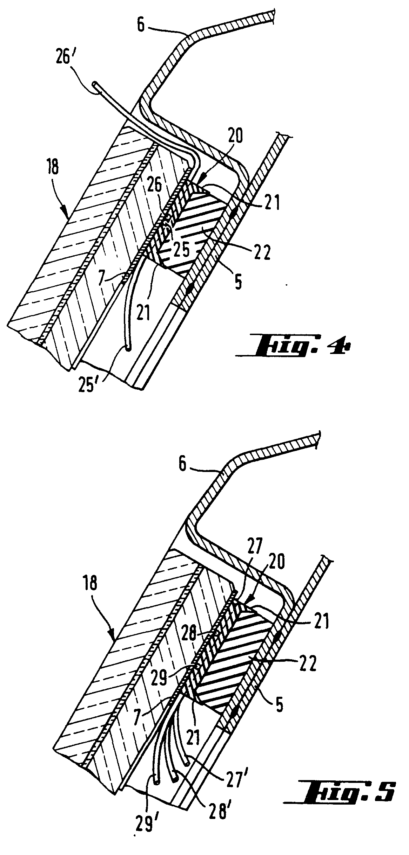

Egalement figure 2, on a présenté une forme de réalisation de l'invention où on réalise le collage du pare-brise 1 sur la tôle de fixation 5 d'une baie 6 à l'aide d'un cordon de colle homogène. Cette fois-ci, juste avant le montage du pare-brise 1 dans la baie on a posé le cordon de colle 12 dans la zone périphérique du pare-brise 1. Cette pose s'effectue, ici aussi, par extrusion, à l'aide d'une buse soit directement sur la surface du verre soit sur le dépôt superficiel opaque 7. L'extrusion et le dépôt du cordon 12 s'effectuent comme précédemment à l'aide d'un dispositif d'extrusion représenté figure 6. Ici également on a posé les fils 13, 14 soit intégrés directement dans le cordon 12 soit déposés immédiatement à son voisinage. Ces emplacements sont choisis de telle manière que chacun des fils 13, 14 n'ait à cisailler que la moitié de la section du cordon 12. Pour ce faire, on a situé le fil 13 dans le coin que constitue la surface interne du parebrise 1 et le bord interne 15 du cordon 12 et le fil 14 au milieu de la surface de contact du cordon 12 avec la surface du parebrise 1. Les deux extrémités 13' et 14' des fils 13 et 14 sont cette fois-ci conduites vers l'extérieur où ils resteront dans la fente qui subsiste entre le chant externe du pare-brise et l'encadrement de la baie. En cas de nécessité on ira les extraire de cette fente et ils pourront donc être saisis depuis l'extérieur de la carrosserie. Les extrémités ont été marquées individuellement pour être identifiées comme appartenant soit au fil 13 interne soit au fil 14 médian. Pour cisailler le cordon 12 on devra d'abord tirer sur le fil 14 placé au milieu du cordon dans une direction adaptée puis dans un deuxième temps on tirera sur le fil 13.

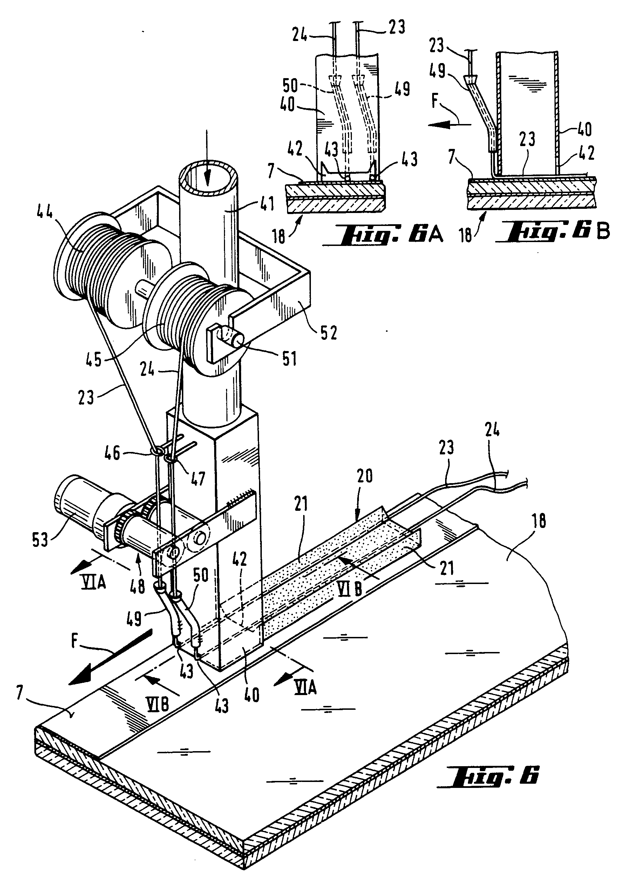

Les formes de réalisation de l'invention présentées dans les figures 3 à 5 se différencient de celles présentées jusqu'à présent en ce que le parebrise 18 est équipé bien avant son montage, par exemple juste après sa fabrication, d'un cordon profilé 20 extrudé qui servira de support à un deuxième cordon 22 qui permettre, lui, de réaliser le collage proprement dit avec la tôle de fixation 5 au moment du montage du parebrise dans la carrosserie. Cette forme de réalisation présente l'avantage d'une phase de production simplifiée sur la ligne de montage automobile; c'est ainsi que plusieurs phases ont déjà été effectuées auparavant, à savoir le nettoyage de la surface du verre à sa périphérie, le dépôt d'un primaire d'adhérence sur la surface du verre ainsi que les manipulations nécessaires au dépôt des fils souples destinés à provoquer le cisaillement du cordon. De cette manière, la seule action qui subsiste sur la ligne de montage concerne le dépôt du cordon de colle 22 qui sera responsable du collage proprement dit. Cette dernière opération peut être effectuée ou bien du côté du parebrise sur le cordon profilé durci 20 ou bien sur la tôle de fixation 5.

Le cordon profilé 20 est constitué par une masse adhésive qui a durci. Celle-ci doit être compatible avec la colle utilisée pour le cordon 22 ete adhérer parfaitement à elle. Avantageusement le cordon profilé 20 possède la même composition chimique ou une composition voisine de celle du cordon 22. Pour remplir ce rôle des colles polyuréthanes unicomposantes durcissant à l'humidité ou des colles polyuréthanes bicomposantes se sont entre autres montrées adaptées.

Le cordon profilé est déposé à l'aide d'une buse d'extrusion telle que celle représentée figure 6. La section de ce cordon 20 est en forme de U. Les deux branches du U ont pour fonction lors du montage du parebrise de limiter latéralement le coulage du cordon 22. On voit figure 3 que, lors de l'extrusion du premier cordon profilé 20 on introduit deux fils 23 et 24. Le fil souple 23 suit le dièdre constitué par, d'une part la branche extérieure 21 du U et d'autre part par la surface du verre. Le fil 24 quant à lui a été introduit au milieu de la surface de contact entre le cordon profilé 20 et, soit la surface de verre, soit le dépôt opaque 7 ou bien encore la couche de primaire si elle existe. Les deux extrémités 23' et 24' des fils 23 et 24 sont conduites à leur sortie du cordon profilé 20 du côté interne pare-brise 18 et identifiés comme fils intérieur et extérieur respectivement. Lorsque le démontage du parebrise 18 s'imposera on tirera d'abord sur le fil 24 puis sur le fil 23. On obtiendra ainsi que le cordon profilé 20 se trouve tranché en deux étapes successives.

Sur la figure 4 on présente une liaison par collage tout à fait comparable à celle de la figure 3 et sa description sera la même. Mais ici on constate une différence puisque contrairement à la figure 3 les deux fils 25 et 26 restent voisins au milieu de la surface de contact entre le cordon profilé 20 et le vitrage ou bien au milieu du cordon profilé 20 proprement dit. Tandis que l'extrémité 25' du fil 25 est conduite du côté interne du profilé 20 l'extrémité 26' du fil 26 est, elle, conduite du côté externe de ce même cordon 20. Lorsqu'on voudra provoquer le démontage du pare-brise, le fil 25 sera extrait du profilé 20 du côté de l'intérieur du parebrise tandis que le fil 26 sera lui, extrait du profilé 20 vers l'extérieur du parebrise.

Enfin, figure 5, on a présenté une forme de réalisation où le parebrise 18 est équipé d'un cordon profilé 20 dans lequel trois fils souples 27, 28 et 29 ont été introduits. Tandis que le fil 27 est placé le long du dièdre constitué par la surface extérieure de la branche 21 du U et la surface voisine du vitrage 18, les deux autres fils 28 et 29 sont répartis dans la section du cordon profilé 20 de telle sorte que chacun des trois fils soit concerné par un tiers de la section du profilé. Les extrémités 27', 28' et 29' des trois fils sortent du cordon profilé 20 du côté interne du parebrise. Lorsqu'on devra démonter le parebrise 18 on commencera par extraire l'extrémité 29' du fil le plus interne 29 et on extraiera ainsi celui-ci du cordon profilé 20. Ce sera ensuite le tour du fil médian 28 puis enfin du fil externe 27.

La figure 6 présente un dispositif qui permet de déposer simultanément un cordon de colle et deux fils souples qui serviront à son cisaillement. Dans l'exemple représenté le dispositif permet de déposer le cordon profilé 20 en U limité par les deux branches 21 du U dans la zone périphérique du parebrise 18. Le dispositif comprend une buse 40 en forme de tube carré qui se termine par un tube rond 41. Le tube 41 est alimenté par un tuyau à haute pression non représenté. Ce tuyau est lui-même rélié à un système de pompage également non représenté qui est capable d'amener la masse adhésive sous pression jusqu'à la buse 40.

A son extrémité inférieure la buse 40 est ouverte et possède de plus une ouverture latérale calibrée 42 dirigée dans la direction opposée à celle du mouvement F. C'est par cet orifice que la masse adhésive est expulsée pour déposer un cordon avec une section appropriée.

A l'opposé de l'ouverture latérale 42 de la buse d'extrusion 40, là où les deux fils doivent être introduits dans le profilé on a prévu des passages 43 au travers desquels les fils 23 et 24 seront introduits dans la masse adhésive. Le fil 23 est alimenté à partir d'une bobine 44 et le fil 24 à partir d'une bobine 45. Ils sont conduits grâce à des guides 46 et 47 à une paire commune de rouleaux d'entraînement 48 jusqu'à des guides tubulaires 49 et 50. Les deux supports 51 et 52 des bobines d'alimentation 44 et 45, les guides 46 et 47 ainsi que la paire de rouleaux d'entraînement sont liés à la buse 40 et au tube 41. Les rouleaux 48 sont entraînés par le moteur 53 à une vitesse qui correspond à la vitesse de déplacement de la buse dans la direction de la flèche F. Les autres éléments du processus de dépôt du cordon profilé sont les mêmes que ceux du dépôt de brevet européen publié sous le n° EP—A—0 121 480 auquel on est invité à se référer.

D'une manière générale on peut intégrer les fils souples séparément dans la masse adhésive. Mais si le dépôt se fait simultanément la procédure peut s'en trouver simplifiée. Dans ce dernier cas, on peut utiliser des dispositifs associant les fils tels qu'ils sont présentés sur les figures 7, 8 et 9. Sur la figure 7, on présente ainsi un double fil où les deux brins 30 et 31 sont juxtaposés en maintenus au contact à l'aide de fils fins 32. La résistance à la rupture des fils fins 32 est relativement faible et elle est ajustée à une valeur telle que d'une part les deux fils souples restent juxtaposés lors de leur dépôt dans la masse adhésive et que d'autre part les fils fins 32 se rompent facilement lorsque les fils souples seront extraits individuellement du cordon profilé. La même chose est valable pour le dispositif présenté figure 8. Ici les deux fils 33, 34 sont entourés d'une gaine 35 qui sera facile à déchirer. Pour éviter une les deux fils souples 33, 34 se trouvent extraits de la gaine 35 on a prévu ou bien de les coller à l'intérieur de celle-ci, ou bien de lier les extrémités opposés des deux fils 33 et 34 à la masse adhésive. Ces deux systèmes de fils doubles sont particulièrement adaptés à la réalisation de la configuration présentée figure 4.

Même lorsque deux fils souples destinés à provoquer le cisaillement du cordon ne sont pas placés l'un près de l'autre mais qu'ils doivent rester parallèles mais éloignés l'un de l'autre comme c'est par exemple le cas figure 1 et figure 3, on peut être amené à utiliser l'association de deux fils. Alors on utilisera un dispositif tel que celui présenté figure 9. On voit deux fils unitaires 36 et 37 séparés par la distance voulue A—cette distance correspondant à la demi-largeur du cordon profilé ou du cordon produisant le collage. Les deux fils sont associés à l'aide de fils fins 38 avec une fragilité relative.

**Revendications**

1. Procédé de pose d'un vitrage automobile (1, 18) par collage direct dans lequel on pose sur l'une des deux surfaces à coller (7, 5), un cordon d'une masse adhésive pâteuse (8, 12, 20) à l'aide d'une buse d'extrusion (40), ce cordon étant destiné à jouer immédiatement le rôle de colle, ou bien, après durcissement, celui de cordon intercalaire (20) entre le vitrage (1, 18) et un autre cordon de colle (28), procédé dans lequel on place simultanément avec le cordon, soit au coeur du cordon, soit dans sa proximité immédiate, un fil souple (9, 10—13, 14—23, 24—25, 26, 27 à 29) à haute résistance à la traction, le fil étant destiné lors d'un éventuel démontage ultérieur du vitrage (1, 18), hors de la baie (6), à permettre le cisaillement du cordon, caractérisé en ce qu'on introduit dans le cordon et on dépose avec lui, au moins deux fils (9, 10—13, 14—23, 24—25, 26, 27 à 29) positionnés dans la section du cordon de telle manière que lors du démontage du vitrage (1, 18) chacun des fils n'ait à cisailler qu'une partie de la section du cordon (8, 12, 20).

2. Procédé selon la revendication 1, caractérisé en ce qu'on a placé deux fils souples (25, 26) au voisinage immédiat l'un de l'autre, au milieu de la largeur du cordon de colle (22), et qu'au moins une des extrémités du fil externe (26') est conduite à sa sortie du cordon (22) vers l'extérieur et au moins une des extrémités (25') du fil interne est conduite à sa sortie du cordon (22) vers l'intérieur du véhicule.

3. Procédé selon la revendication 1, caractérisé en ce qu'on place les fils souples à une distance donnée l'un de l'autre à l'intérieur du cordon et en ce qu'un fil suit le dièdre constitué par l'une des surfaces latérales (21) du cordon de colle (22) et par la surface du verre et qu'au moins une des extrémités de chacun des fils est conduite au travers du cordon jusqu'à la surface latérale opposée à ladite surface latérale du cordon et en ce que les extrémités sont identifiées de telle sorte qu'on sache dans quel ordre il faut extraire les différents fils du cordon.

4. Procédé selon l'une ou plusieurs des revendications 1 à 3, caractérisé en ce qu'on utilise des fils multiples dans lesquels les fils unitaires sont associés l'un à l'autre de telle manière que la pose de l'ensemble dans la masse adhésive soit simplifiée et que néanmoins lors de leur extraction du cordon la liaison entre les fils (30, 31—36, 37) soit rompue.

5. Dispositif pour réaliser le procédé selon l'une ou plusieurs revendications 1 à 3 à l'aide d'une buse d'extrusion (40) comportant une ouverture calibrée (42) pour déposer une masse adhésive à haute viscosité, caractérisé en ce que la buse (40) comporte au moins deux passages (43) pour conduire deux fils souples (23, 24) au sein de la masse adhésive ainsi qu'au moins deux guides tubulaires (49, 50) et des supports (51, 52) d'au moins deux bobines (44, 45) qui alimentent les fils (23, 24).

6. Vitrage automobile destiné à être posé par collage direct selon le procédé défine par l'une des revendications 1 à 4 et comportant au bord un cordon profilé (20) déposé avec une buse et durci, caractérisé en ce qu'on a placé dans le cordon (20) au moins deux fils souples (23, 24; 25, 26; 27, 28, 29) destinés à cisailler le cordon (20) et dont les extrémités sortent latéralement dudit cordon.

**Patentansprüche**

1. Verfahren zum Einsetzen einer Autoglasscheibe (1, 18) durch Direktverklebung, bei dem auf eine der beiden miteinander zu verklebenden Flächen (7, 5) mittels einer Extruderdüse (40) ein pastöser Kleberstrang (8, 12, 20) aufgetragen wird, der entweder unmittelbar als solcher für die Verklebung, oder der nach dem Aushärten als Zwischenkörper (20) zwischen der Glasscheibe (1, 18) und einem weiteren Kleberstrang (22) dient, und bei dem gleichzeitig mit dem Kleberstrang eine flexible Schnur (9, 10—13, 14—23, 24—25, 26, 27 bis 29) mit hoher Zugfestigkeit innerhalb des Kleberstrangs oder in seiner unmittelbaren Nähe angeordnet wird, der bei einem eventuellen späteren Ausbauen der Glasscheibe (1, 18) aus dem Fensterrahmen (6) zum Druchtrennen des Kleberstrangs dient, dadurch gekennzeichnet, daß in den Kleberstrang und zusammen mit diesem wenigstens zwei Schnüre (9, 10—13, 14—23, 24—25, 26, 27 bis 29) so in dem Querschnitt des Kleberstrangs angeordnet werden, daß während des Ausbauens der Glasscheibe (1, 18) jede der Schnüre nur einen Teil des Querschnitts des Kleberstrangs (8, 12, 20) zu durchtrennen hat.

2. Verfahren nach Anspruch 1, dadurch gekennzeichnet, daß zwei flexible Schnüre (25, 26) unmittelbar nebeneinander in der Mitte der Breitenabmessung des Kleberstrangs (22) angeordnet werden und wenigstens ein Endabschnitt (26') der äußeren Schnur zur Außenseite des Kleberstrangs (22), und wenigstens ein Endabschnitt (25') der inneren Schnur zur Innenseite aus dem Kleberstrang (22) herausgeführt wird.

3. Verfahren nach Anspruch 1, dadurch gekennzeichnet, daß die flexiblen Schnüre mit einem gegebenen gegenseitigen Abstand in dem Kleberstrang angeordnet werden, wobei eine Schnur entlang einer von einer der seitlichen Begrenzungsflächen (21) des Kleberstrangs (22) und der Glasoberläche gebildeten Kante verläuft, und daß wenigstens ein Endabschnitt jeder Schnur durch den Kleberstrang bis zu der der genannten Begrenzungsfläche gegenüberliegenden seitlichen Begrenzungsfläche des Kleberstrangs aus diesem herausgeführt ist und daß die Endabschnitte derart gekennzeichnet sind, daß man weiß, in welcher Reihenfolge man die verschiedenen Schnüre aus dem Kleberstrang herausziehen muß.

4. Verfahren nach einem oder mehreren der Ansprüche 1 bis 3, dadurch gekennzeichnet, daß Mehrfachschnüre verwendet werden, bei denen die einzelnen Schnüre derart miteinander verbunden sind, daß das gemeinsame Einlegen in die Klebermasse vereinfacht wird, jedoch beim Herausziehen aus dem Kleberstrang die Verbindung zwischen den Schnüren (30, 31—36, 37) aufreißt.

5. Vorrichtung zur Durchführung des Verfahrens nach einem oder mehreren der Ansprüche 1 bis 3, mit einer eine kalibrierte Düsenöffnung (42) aufweisenden Auftragdüse (40) zum Auftragen einer hochviskosen Klebermasse, dadurch gekennzeichnet, daß die Auftragdüse (40) wenigstens zwei Ausnehmungen (43) zum Führen von zwei Schnüren (23, 24) in der Klebermasse, sowie wenigstens zwei Führungsrohre (49, 50) und Halterungen (51, 52) für wenigstens zwei Vorratsspulen (44, 45) die Schnüre (23, 24) aufweist.

6. Autoglasscheibe für die Montage durch Direktverklebung nach dem duch einen der Ansprüche 1 bis 4 definierten Verfahren, mit einem an Rand mittels einer Düse aufgebrachten ausgehärteten Profilstrang (20), dadurch gekennzeichnet, daß in dem Profilstrang (20) wenigstens zwei Schnüre (23, 24—25, 26—27, 28, 29) zum Durchtrennen des Profilstrangs (20) angeordnet sind, deren Endabschnitte seitlich aus dem Profilstrang (20) herausgeführt sind.

## Claims

1. Process for fitting a car window (1, 18) by direct bonding in which on one of the two surfaces to be bonded (7, 5) is placed a bead of a pasty adhesive material (8, 12, 20) with the aid of an extrusion nozzle (40), said bead serving to immediately fulfil the function of the adhesive or, after hardening, that of the intercalated bead (20) between the window (1, 18) and another adhesive bead (22), wherein simultaneously with the installation of the bead, either within the core of the bead, or in its immediate vicinity, is placed a high tensile strength flexible wire (9, 10, 13, 14, 23, 24, 25, 26, 27 to 29), said wire serving, during any subsequent dismantling of the window (1, 18), outside the opening (6), to permit the shearing of the bead, characterized in that into the bead and deposited therewith are introduced at least two wires (9, 10, 13, 14, 23, 24, 25, 26, 27 to 29) positioned in the section of the bead in such a way that during the dismantling of the window (1, 18), each of the wires only has to shear part of the section of the bead (8, 12, 20).

2. Process according to claim 1, characterized in that two flexible wires (25, 26) are placed in the immediate vicinity of one another in the centre of the width of the adhesive bead (22) and that at least one of the ends of the outer wire (26) is moved towards the outside on passing out of the bead (22) and at least one of the ends of the inner wire is brought into the interior of the vehicle when it passes out of the bead (22).

3. Process according to claim 1, characterized in that the flexible wires are placed at a predetermined distance from one another within the bead and in that one wire follows the dihedron constituted by one of the lateral surfaces (21) of the adhesive bead (22) and by the surface of the glass and that at least one of the ends of each of the wires is brought through the bead up to the lateral surface opposite to said lateral surface of the bead and in that the ends are identified in such a way that it is possible to know the order in which it is necessary to extract the different wires from the bead.

4. Process according to one or more of the claims 1 to 3, characterized in that use is made of multiple wires, in which the unitary wires are associated with one another in such a way that the installation of the assembly in the adhesive material is simplified, but that during the extraction thereof from the bead the connection between the wires (30, 31—36, 37) is broken.

5. Apparatus for performing the process according to one or more of the claims 1 to 3 with the aid of an extrusion nozzle (40) having a calibrated opening (42) for depositing a high viscosity adhesive material, characterized in that the nozzle (40) has at least two passages (43) for bringing two flexible wires (23, 24) into the adhesive material, as well as at least two tubular guides (49, 50) and supports (51, 52) of at least two coils (44, 45) which supply the wires (23, 24).

6. Car window to be installed by direct bonding in accordance with the process defined by one of the claims 1 to 4 and having on the edge a profiled bead (20) deposited with a nozzle and hardened, characterized in that in the bead (20) are placed at least two flexible wires (23, 24, 25, 26, 27, 28, 29) for shearing the bead (20) and whose ends pass laterally out of said bead.

EP  0 298 788  B1

Fig. 1

Fig. 2

Fig. 3

1

**Fig. 4**

**Fig. 5**

Fig. 6A

Fig. 6B

Fig. 6

*Fig. 7*

30
31
32
32
30
31

*Fig. 8*

33
34
35
33
35
34

*Fig. 9*

38
36
37
A